# EUROPEAN PATENT SPECIFICATION

(11) **EP 1 918 932 B1**
(45) Date of publication and mention of the grant of the patent: **29.04.2009**
(21) Application number: 07113097.5
(22) Date of filing: 25.07.2007
(51) Int. Cl.: G11B 27/00, G06F 17/30, H04N 5/00, G11B 27/36

(54) **Video apparatus having bookmark function for searching programs and method for creating bookmarks**
Videogerät mit Lesezeichenfunktion zur Suche von Programmen und Verfahren zur Erstellung von Lesezeichen
Appareil vidéo ayant une fonction de signets pour chercher des programmes et procédé pour créer des signets

(30) Priority: 30.10.2006 KR 20060105780
(43) Date of publication of application: 07.05.2008
(73) Proprietor: Samsung Electronics Co., Ltd., Suwon-si, Gyeonggi-do 442-742 (KR)
(72) Inventor: Park, Mi-ju, Seoul (KR); Kim, Dae-gu, Seoul (KR)
(74) Representative: Perkins, Dawn Elizabeth

(56) References cited:
- KR-A- 20040 016 017
- US-A- 6 154 771
- US-A1- 2005 086 703
- US-A1- 2006 080 716
- ETSI: "TS 102-802-3-2 V1.3.1: Broadcast and On-line Services: Search, select, and rightful use of content on personal storage systems ( TV-Anytime). Part 3:Metadata; Sub-part 2: System apsects in unidirectional environment" EUROPEAN TELECOMMUNICATIONS STANDARDS INSTITUTE: TECHNICAL SPECIFICATION, vol. 102, no. 822, January 2006 (2006-01), pages 1-73, XP014032382 Sophia-Antipolis, FR ISSN: 0000-0001
- COSMAS J ET AL: "Customtv with MPEG-4 and MPEG-7" 6 December 1999 (1999-12-06), , PAGE(S) 9-1 , XP006502474 * abstract * * page 9, right-hand column, paragraph 1 *

## Description

Apparatuses and methods consistent with the present invention relate to having a bookmark function for a program search and creating bookmarks, and more particularly, to having a bookmark function for a program search and creating bookmarks whenever a program changes.

As a recording/playing back device for personal use, personal video recorders (PVRs) comprise high capacity storage media, such as hard disk drives (HDDs) or other storage media. Accordingly, PVRs can store analog broadcast programs or digital broadcast programs, and play back the stored analog or digital broadcast programs.

The storage capacity of the storage media of PVRs has become increasingly high so that many broadcast programs can be stored in a single storage medium. Accordingly, bookmark functions are provided so that a user can easily search for a desired part of a stored broadcast program to be played back.

If PVRs are in operation, a progress bar is formed on a display to display the storage progress state of broadcast programs in combination with the total storage capacity of the storage media. In this situation, if a user creates a bookmark at a desired point in a program, a specific mark indicating the bookmark appears in a position corresponding to the desired point. Additionally, if a user selects a bookmark of a desired part by moving a cursor, a program corresponding to the bookmark is played back.

Since this current bookmark function enables the user to directly select a bookmark for a desired scene, programs without any bookmark may be present even though a bookmark function is stored in the storage medium. In order to play back such programs without any bookmark, a user uses a rewind button. A relatively long period of time may be required in order to search for a desired program, and more time and effort may also be needed to perform play back from the beginning of the corresponding program. Furthermore, because the contents of a program is not displayed on a conventional progress bar, it is more difficult to search for programs without any bookmarks.

While the program is stored, a user may desire to start play back from a specific portion in which a bookmark is created, or to start play back from the beginning of the program. In this situation, if the conventional bookmark function is used, there is a need for a user to create a bookmark after a desired program is started. However, if a bookmark is created after the program is started, the program may be played back from the portion in which a bookmark is created, not from the first scene of the program when the user plays back the program. In other words, separate operations may be performed in order to play back some scenes of the beginning of the program, which is inconvenient.

In order to avoid such an inconvenience, a bookmark may be created before a new program is started. However, since a user does not exactly know the start position of the new program, a bookmark may be created in an advertisement broadcast before the new program is started. Accordingly, this may result in a user again viewing the advertisement on playing back the program.

The above inconvenience may occur also when a user changes a channel. If a user changes a channel, the program changes, and thus, the user may desire to create a bookmark in a program broadcast on the new channel. However, it is also difficult to create a bookmark from the start position of the program for the above reason. To solve this problem, a user may create a bookmark before changing the channel, but in this situation, a bookmark may be created in a program broadcast on a different channel which is passed during the channel change. Therefore, when a user selects a bookmark and plays back the program corresponding to the bookmark, the user may mistakenly believe that the program is not the desired program, and skip through the program, and accordingly, the user may not search for the desired program.

In the case of digital televisions (DTVs), a time shift function is supported which is similar to the bookmark function of PVRs. The time shift function enables programs to be recorded for a predetermined time period using a flash memory installed in DTVs, so that programs can be set to be automatically recorded. The time shift function has difference from the recording/playing back functions of PVRs in which the time shift function is deleted if DTVs are turned off. As the flash memory capacity increases and recording times become longer, the time shift function of DTVs has became more similar to the bookmark function of PVRs. Therefore, DTVs may have the same problems as those of the bookmark function of PVRs, as described above.

Accordingly, while storing broadcast programs in video apparatuses, such as PVRs or DTVs, if channels change or programs change on the same channel, there is a need to set a bookmark at the start point of the program to make it easy for the user to search each program.

US2006/0080716, on which the precharacterising portion of claim 1 is based, discloses a recording apparatus which can place digital markers at desired locations either manually or automatically during live caching of video content or playback of previously stored content.

An aspect of the present invention is to provide a video apparatus having a bookmark function for searching a program and a method for creating a bookmark, in which a user can easily search each of the stored programs.

According to an aspect of the present invention, there is provided a video apparatus comprising:
a storage unit for storing at least one broadcast program; and
a bookmark creator configured to create a bookmark and store the bookmark in the storage unit; characterised by
a program detector configured to detect a change in the broadcast program during storing of the broadcast program by comparing program information contained in a broadcast stream of a broadcast program currently being stored with program information of a previously stored broadcast program to determine the change in broadcast program, wherein the bookmark creator is configured to create the bookmark indicating a point where the broadcast program changes if the change is detected.

The program detector may determine whether the program changes based on program information assigned when the program is transmitted.

The program detector may determine that the program changes when the channel changes.

The apparatus may further comprise a progress bar display which displays the storage state of the program, and a progress bar representing a bookmark created by the bookmark creator.

The bookmark may be indicated by at least one of a line, a space, and a specific mark on one side of the progress bar.

The apparatus may further comprise an input means for external input, and the input means may comprise a bookmark selection button for selecting the bookmark. The bookmark selection button may comprise at least one of a direction key used to select the bookmark by moving a cursor formed on the progress bar up and down or right and left, a selection key used to select the bookmark by moving the cursor according to the number of times the key is pressed, and a number key used to select the bookmark that corresponds to the selected number.

The apparatus may further comprise a controller which obtains a program corresponding to the bookmark from the storage unit and displays the program if the bookmark is selected.

According to another aspect of the prevent invention, there is provided a method for creating a bookmark for searching a storage unit for a stored broadcast program, comprising:
storing a broadcast program to be displayed;
determining whether the broadcast program changes during storing of the broadcast program by comparing program information contained in a broadcast stream of a broadcast program currently being stored with program information of a previously stored broadcast program;
creating a bookmark indicating a point where the broadcast program changes if the program change is determined; and storing the created bookmark.

The above and/or other aspects of the present invention will be more apparent by describing in detail certain exemplary embodiments of the present invention with reference to the accompanying drawings, in which:
Figure 1 is a schematic configuration view of a video apparatus having a bookmark function for searching a program according to an exemplary embodiment of the present invention;
Figure 2 is a detailed configuration view of a video apparatus such as the one depicted in Figure 1 according to an exemplary embodiment of the present invention;
Figures 3A to 3C are views of a progress bar with which a bookmark is displayed according to an exemplary embodiment of the present invention;
Figure 4 is a flowchart illustrating the operations for creating a bookmark in the video apparatus according to an exemplary embodiment of the present invention; and
Figure 5 is a flowchart illustrating the operations for playing back a program using a bookmark according to an exemplary embodiment of the present invention.

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure exemplary embodiments of the present invention with unnecessary detail.

A bookmark function for searching a program according to an exemplary embodiment of the present invention is applicable to a personal video recorder (PVR) and a digital television (DTV), and the PVR and DTV are collectively designated as a video apparatus in the following exemplary embodiments of the present invention.

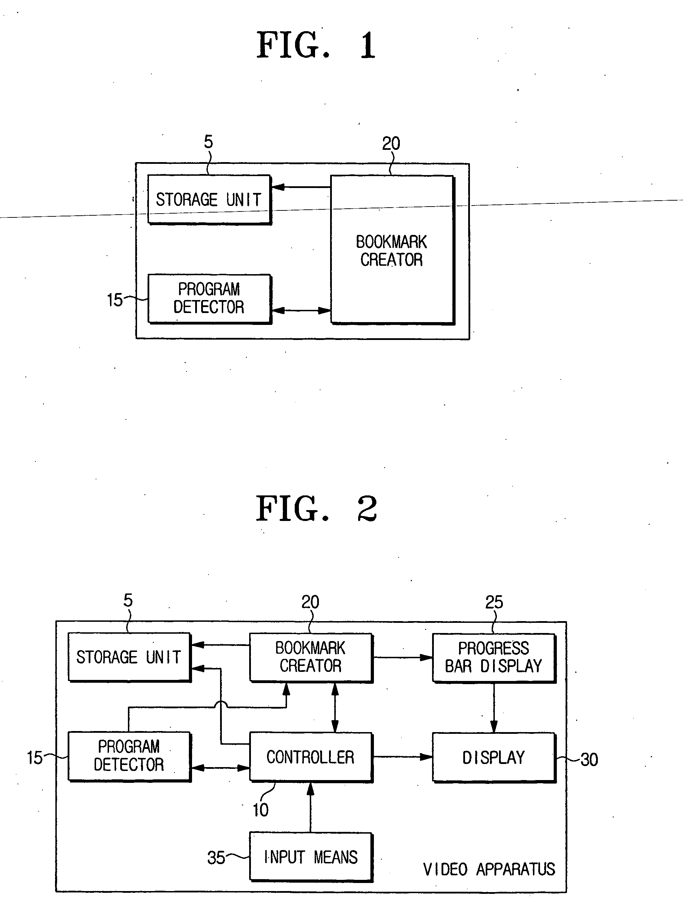

Figure 1 is a schematic configuration view of a video apparatus having a bookmark function for searching a program according to an exemplary embodiment of the present invention.

The video apparatus according to the exemplary embodiment of the present invention comprises a storage unit 5, a program detector 15, and a bookmark creator 20.

The exemplary storage unit 5 comprises a high capacity storage medium, such as a hard disk drive (HDD), a flash memory, or other storage media known in the art, and stores digital or analog broadcast program. Additionally, the storage unit 5 stores location information of the bookmark created by the bookmark creator 20. The location information of the bookmark may comprise information pertaining to the storage time period, the location on the HDD, and other information.

The program detector 15 detects whether a program being stored in the storage unit 5 changes, or whether the channel changes.

If the program detector 15 detects the changes in the program or the channel, the bookmark creator 20 creates a bookmark at the start point of the program and stores the bookmark in the storage unit 5. If the first broadcast stream is input by changing the program or the channel, the program detector 15 may detect the changes in the program or the channel. Accordingly, when the bookmark creator 20 creates a bookmark, the bookmark is added to the first broadcast stream of a new program. In other words, if a user selects a bookmark, play back may be performed from the first broadcast stream of the stored program.

Figure 2 is a detailed configuration view of a video apparatus such as the one depicted in Figure 1, according to an exemplary embodiment of the present invention.

In Figure 2, the video apparatus comprises a progress bar display 25, an input means 35, a display 30, and a controller 10, in addition to the storage unit 5, the program detector 15, and the bookmark creator 20 such as the ones described above with reference to Figure 1.

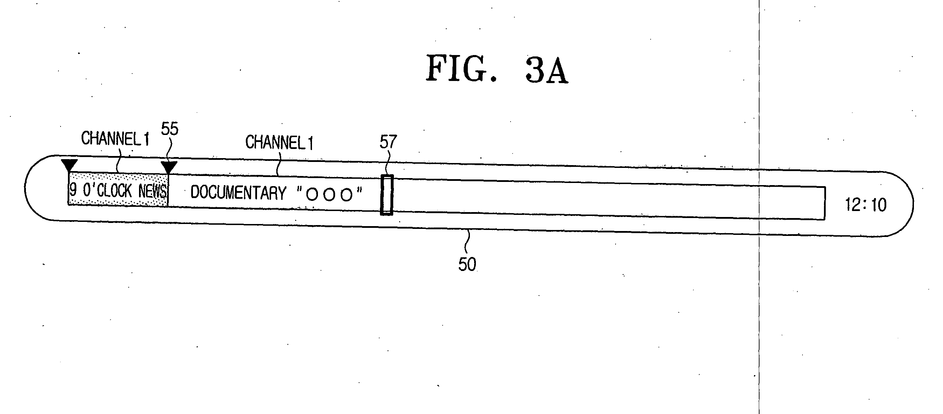

The progress bar display 25 displays a progress bar in a predetermined position of the display 30. In an exemplary progress bar having the shape of a long bar as shown in Figures 3A to 3C, the position of a currently stored program is displayed based on the total storage capacity of the storage medium. A progress bar 50 is divided into a field in which the program is stored and a field in which the program is not stored, using different colors. The field in which the program is stored is segmented according to each of the stored programs, and the title of each program is present on each program segment. Additionally, the progress bar 50 comprises bookmarks 55 and a cursor 57 indicating the position of a program which is currently played back on the display 30, and the time period required for the currently played back program based on the total storage capacity of the storage unit 5 is displayed at the right hand side of the progress bar 50.

Figures 3A to 3C are views of a progress bar on which a bookmark is displayed according to an exemplary embodiment of the present invention.

In the progress bar 50 shown in Figure 3A, "9 o'clock news" is stored, and "Documentary 000", which is the second program, is then stored. The cursor 57 is placed at the end of the currently stored program.

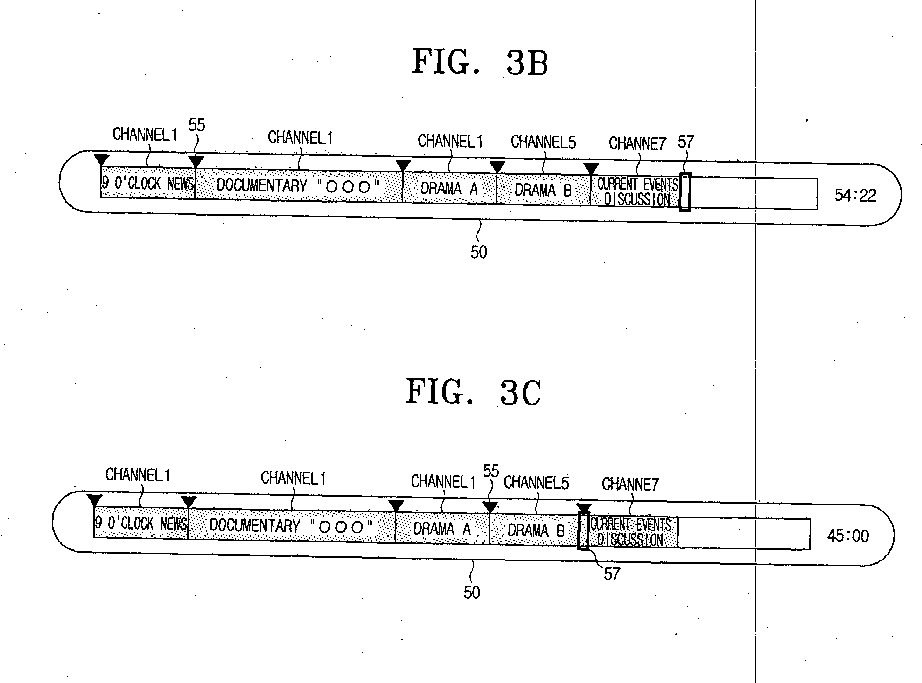

In Figure 3B, the cursor 57 is placed at the very end portion of the field in which programs are stored. In other words, the program which is currently played back on the display 30 is an external program which is displayed and is currently being recorded.

In Figure 3C, the cursor 57 is placed at the beginning portion of "Current Events Discussion" which is the fifth program of the field in which the program is stored.
That is, the "Current Events Discussion" program which is previously stored in the storage unit 5 is currently played back on the display 30.

The above-described program detector 15 determines whether the program changes based on program information provided when the program is transmitted, and detects whether the channel changes according to the input from the input means 35.

To determine that the program is changing based on the program information, the program detector 15 compares information on a previous program to information on the program currently stored in the storage unit 5, and as a result, if the program information changes, the program detector 15 determines that the program is changing. Accordingly, the program detector 15 may determine that the program changes within the same channel 1, for example "9 o'clock news" changes to "Documentary 000" on the progress bar shown in Figures 3A to 3C.

In this case, the program information refers to additional data provided in combination with video data and audio data, and is included in every broadcast stream. The program information is designated as advanced program guide (APG) data in the case of digital satellite broadcasting, and designated as electronic program guide (EPG) data in the case of digital terrestrial broadcasting. The APG data or EPG data comprises information relating to the category, program title, writer's name, producer's name, production name, actor's names, channel name, and time of broadcasting. These APG and EPG data are stored in the storage unit 5 together with the video and audio data, and are displayed on the display 30 according to a user command.

The program detector 15 compares the information on the previous program to the information on the currently stored program, based on at least one of the information included in the APG and EPG data. The program information is included in every broadcast stream, and thus, the program detector 15 can compare information on programs for every hour, and can also determine whether the program changes before the program is stored or displayed.

Upon determining whether the channel changes, the program detector 15 may determine that the program is changing by monitoring the input means 35 that may be used by a user to change the channel. For example, "Drama A" of channel 1 is changed to "Drama B" of channel 5 in the progress bar 50 shown in Figures 3B to 3C. Additionally, even when the video apparatus turns on and the program is stored first in the storage unit 5, the program detector 15 may determine that the program changes.

If the bookmark creator 20 creates a bookmark, the progress bar display 25 displays on the progress bar 50 that the bookmark has been created. The bookmark appears at the top of each program, and may be indicated by a thick line, a space, a specific symbol, or marks. As shown in Figures 3A to 3C, a bookmark 55 is displayed in the form of an inverted triangle at the top of the progress bar 50.

The input means 35 is provided for external user input, and a manufacturing panel mounted on the video apparatus or a remote controller may be used as the input means 35. The input means 35 may comprise bookmark selection buttons for selecting the bookmark 55, and the bookmark selection buttons may comprise direction keys, general selection keys, number keys, or other keys.

If the bookmark selection buttons comprises direction keys, the direction keys may comprise up and down arrow keys or right and left arrow keys. In the case of the up and down arrow keys, if the up arrow key is actuated, the bookmark 55 is selected while the cursor 57 moves in the reverse direction (upstream), and if the down arrow key is actuated, the bookmark 55 is selected while the cursor 57 moves in the forward direction (downstream). Likewise, in the case of the right and left arrow keys, if the left arrow key is actuated, the bookmark 55 is selected while the cursor 57 moves in the reverse direction (left), and if the right arrow key is actuated, the bookmark 55 is selected while the cursor 57 moves in the forward direction (right). In other words, according to the actuation of the up and down arrow keys or the right and left arrow keys, the bookmark 55 is selected sequentially or reverse sequentially in the order of "9 o'clock news", "Documentary 000", "Drama A", "Drama B", and "Current Events Discussion".

If the general selection keys are used as the bookmark selection button, the bookmark 55 is selected while the cursor 57 moves sequentially in a forward or reverse direction in response to the user pressing the general selection key. At this time, the selection key circularly selects the bookmark 55. In other words, if the bookmark 55 is selected in a forward direction, the last bookmark 55 is selected, and if the selection key is pressed again, the first bookmark 55 is again selected.

If the number keys are used as the bookmark selection button, a separate bookmark key is needed in addition to the number keys. Since the number keys are generally used to enter channel numbers, there is a need for an input to inform that the bookmark 55 is selected using the bookmark key other than the number keys. Additionally, in order to use the number keys, the bookmark 55 is numbered sequentially. For example, as shown in Figure 3B, the bookmark for "9 o'clock news", "Documentary 000", "Drama A", "Drama B", and "Current Events Discussion" may be numbered by numerals 1 to 5, respectively. Accordingly, the bookmark 55 may be selected using the separate bookmark key, and subsequently, the bookmark 55 of the desired program is selected using the number keys.

If the bookmark function is selected, the controller 10 controls the progress bar display 25 so that the progress bar 50 is displayed, and permits the program detector 15 to detect whether the program and/or channel change. If the bookmark 55 is created by changing the program and/or channel, the controller 10 notifies the progress bar display 25 that the bookmark 55 is created, and the progress bar display 25 displays the bookmark 55 at the corresponding position. Additionally, if the bookmark 55 is selected using the bookmark selection button on the input means 35, the controller 10 obtains the program corresponding to the selected bookmark 55 from the storage unit 5 and allows the program to be displayed on the display 30.

In the case of the DTV, if a power source is applied, the DTV may be set such that a program is automatically stored in the flash memory and the bookmark function is performed. In this situation, it is apparent that if the DTV is turned on, the controller 10 may control the progress bar display 25 such that the progress bar 50 is automatically displayed, and may cause the bookmark function to be performed.

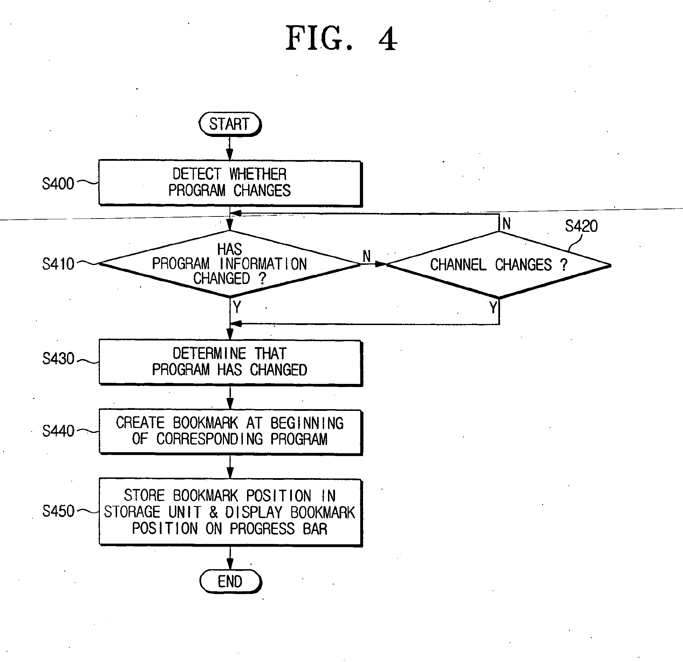

Hereinafter, the operation of creating a bookmark 55 in the video apparatus according to an exemplary, non-limiting embodiment will be described with reference to Figure 4.

In the situation where a user selects the bookmark function, or the bookmark function is set so as to be performed automatically when the video apparatus is turned on, the controller 10 actuates the progress bar display 25 so that the progress bar 50 is displayed as shown in Figures 3A and 3B, and operates the program detector 15 in operation S400.

The program detector 15 compares program information contained in the broadcast stream of the currently stored program to information on a program stored prior to the current program, and determines whether the program changes in operation S410. If it is determined that the program changes in operation S430, the program detector 15 informs the bookmark creator 20 that the program changes. At this time, the program detector 15 determines that the program changes, even when there is no information on the program stored prior to the current program.

If the program information is not changed in operation S410-N, the program detector 15 detects whether the channel changes in operation S420, and determines that the program changes if the channel changes in operation S430 -Y.

If it is determined that the program or the channel changes, the program detector 15 informs the bookmark creator 20 that the program or the channel changed, and a bookmark 55 is created by the bookmark creator 20 in the first broadcast stream of the changed program in operation S440. The bookmark creator 20 stores the position of the bookmark 55 in the storage unit 5, and informs the controller 10 that the bookmark 55 is created. The controller 10 provides the position of the bookmark 55 to the progress bar display 25, and the progress bar display 25 displays the bookmark 55 at the start position of the program in operation S450.

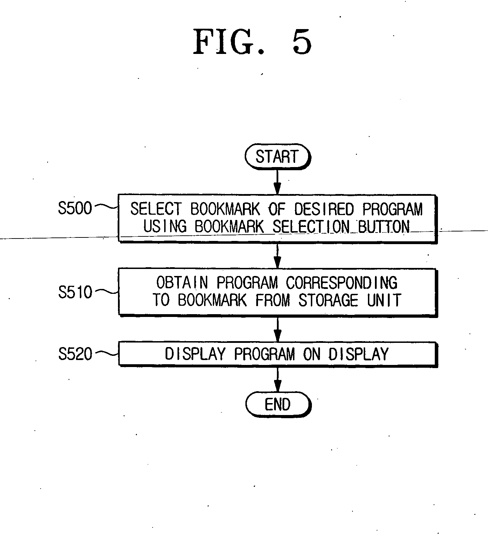

Figure 5 illustrates the operation of selecting the bookmark 55 and playing back the program according to an exemplary embodiment of the present invention.

If a user desires to play back the previous program in a state where the bookmark 55 is created, the user may select the bookmark 55 of the desired program using the bookmark selection button in operation S500, in which case the controller 10 obtains the program corresponding to the selected bookmark 55 from the storage unit 5 in operation S510, and displays the program on the display 30 in operation S520.

As described above, in the video apparatus according to exemplary embodiments of the present invention, the bookmark 55 is automatically created whenever the program changes, so that the bookmark 55 can be created at the start point of the program when the channel changes, or when a new program is started on the same channel. Accordingly, a user can easily play back each of the stored programs using the bookmark. Additionally, play back may be performed from the beginning of each program, and thus, user convenience can be enhanced because it is not necessary to miss the beginning portion of the program or to view advertisements before the beginning of the program in the same manner as in the background art.

The foregoing exemplary embodiments and advantages are merely exemplary and are not to be construed as limiting the present invention. The present teachings can be readily applied to other types of apparatuses. Also, the description of the exemplary embodiments of the present invention is intended to be illustrative, and not to limit the scope of the claims, and many alternatives, modifications, and variations fall within the scope of the claims will be apparent to those skilled in the art.

## Claims

1. A video apparatus comprising:
a storage unit (15) for storing at least one broadcast program; and
a bookmark creator (20) configured to create a bookmark (55) and store the bookmark in the storage unit (15); **characterised by**
a program detector (15) configured to detect a change in the broadcast program during storing of the broadcast program by comparing program information contained in a broadcast stream of a broadcast program currently being stored with program information of a previously stored broadcast program to determine the change in broadcast program, wherein the bookmark creator (20) is configured to create the bookmark (55) indicating a point where the broadcast program changes if the change is detected.

2. The apparatus as claimed in claim 1, wherein the program detector (15) is configured to determine whether the broadcast program changes based on program information provided when the broadcast program is transmitted.

3. The apparatus as claimed in claim 1 or 2, wherein the program information is Electronic Program Guide (EPG) information or Advanced Program Guide (APG) information.

4. The apparatus as claimed in any one of the preceding claims, wherein the program detector (15) is configured to determine that the broadcast program changes when a channel changes.

5. The apparatus as claimed in any one of the preceding claims, further comprising a progress bar display (25) which represents stored broadcast programs, and a progress bar indicating a position of the bookmark (55) created by the bookmark creator (20).

6. The apparatus as claimed in claim 5, wherein the bookmark is indicated by at least one of a line, a space, and a specific mark on one side of the progress bar.

7. The apparatus as claimed in claim 5 or 6, further comprising an input means for external input, wherein the input means comprises a bookmark selection button for selecting the bookmark.

8. The apparatus as claimed in claim 7, wherein the bookmark selection button comprises at least one of a direction key used to select the bookmark by moving a cursor formed on the progress bar up and down or right and left, a selection key used to select the bookmark by moving the cursor according to the number of times the key is pressed, and a number key used to select the bookmark corresponding to a number selected with the number key.

9. The apparatus as claimed in any one of the preceding claims, further comprising a controller (10) configured to obtain a stored broadcast program corresponding to the bookmark from the storage unit (5) and display the broadcast program if the bookmark (55) is selected.

10. A method for creating a bookmark for searching a storage unit (15) for a stored broadcast program, comprising:
storing a broadcast program to be displayed; and **characterised by**
determining whether the broadcast program changes during storing of the broadcast program by comparing program information contained in a broadcast stream of a broadcast program currently being stored with program information of a previously stored broadcast program;
creating a bookmark indicating a point where the broadcast program changes if the program change is determined; and
storing the created bookmark.

11. The method as claimed in claim 10, wherein the program information is Electronic Program Guide (EPG) information or Advanced Program Guide (APG) information.

12. The method as claimed in claim 10 or 11, wherein the determining comprises determining whether the broadcast program changes based on program information provided when the broadcast program is transmitted.

13. The method as claimed in claim 10, 11 or 12, wherein the determining comprises determining that the broadcast program changes if a channel changes.

14. The method as claimed in any one of claims 10 to 13, further comprising displaying a storage state of the broadcast program and a progress bar representing a bookmark.

15. The method as claimed in claim 14, wherein the creating comprises indicating the bookmark by at least one of a line, a space, and a specific mark on one side of the progress bar.

## Patentansprüche

1. Videovorrichtung, umfassend:
eine Speichereinheit (15) zum Speichern von zumindest einem Sendeprogramm; und
einen Lesezeichenerzeuger (20), der dazu eingerichtet ist, ein Lesezeichen (55) zu erzeugen und das Lesezeichen in der Speichereinheit (15) zu speichern; **gekennzeichnet durch**
einen Programmdetektor (15), der dazu eingerichtet ist, einen Wechsel im Sendeprogramm während des Speicherns des Sendeprogrammes **durch** Vergleichen einer Programminformation, die in einem Sendestrom eines Sendeprogrammes enthalten ist, welches gerade gespeichert wird, mit einer Programminformation eines vorher gespeicherten Sendeprogrammes zu erfassen, um den Wechsel im Sendeprogramm zu bestimmen, wobei der Lesezeichenerzeuger (20) dazu eingerichtet ist, wenn der Wechsel erfasst wird, das Lesezeichen (55) zu erzeugen, das eine Stelle kennzeichnet, an der das Sendeprogramm wechselt.

2. Vorrichtung nach Anspruch 1, wobei der Programmdetektor (15) dazu eingerichtet ist, basierend auf Programminformation, die bereitgestellt wird, wenn das Sendeprogramm übertragen wird, zu bestimmen, ob das Sendeprogramm wechselt.

3. Vorrichtung nach Anspruch 1 oder 2, wobei die Programminformation eine elektronische Programmführer- (EPG-) Information oder eine erweiterte Programmführer- (APG-) Information ist.

4. Vorrichtung nach einem der vorhergehenden Ansprüche, wobei der Programmdetektor (15) dazu eingerichtet ist, zu bestimmen, dass das Sendeprogramm wechselt, wenn ein Kanal wechselt.

5. Vorrichtung nach einem der vorhergehenden Ansprüche, ferner umfassend eine Fortschrittsbalkenanzeige (25), die gespeicherte Sendeprogramme darstellt, und einen Fortschrittsbalken, der eine Position des Lesezeichens (55) kennzeichnet, das durch den Lesezeichenerzeuger (20) erzeugt wurde.

6. Vorrichtung nach Anspruch 5, wobei das Lesezeichen durch zumindest eine von einer Linie, einer Leerstelle und einer speziellen Markierung auf einer Seite des Fortschrittsbalkens **gekennzeichnet** ist.

7. Vorrichtung nach einem der Ansprüche 5 oder 6, ferner umfassend: eine Eingabeeinrichtung zum externen Eingeben, wobei die Eingabeeinrichtung einen Lesezeichenauswahlknopf zum Auswählen des Lesezeichens umfasst.

8. Vorrichtung nach Anspruch 7, wobei der Lesezeichenauswahlknopf zumindest eine von einer Richtungstaste, die verwendet wird, um das Lesezeichen durch Bewegen eines Cursors, der auf dem Fortschrittsbalken gebildet ist, nach oben und unten oder nach rechts und links auszuwählen, einer Auswahltaste, die verwendet wird, um das Lesezeichen durch Bewegen des Cursors entsprechend der Anzahl auszuwählen, in der die Taste gedrückt wird, und einer Nummerntaste umfasst, die verwendet wird, um das Lesezeichen entsprechend einer Nummer auszuwählen, die mit der Nummerntaste ausgewählt wird.

9. Vorrichtung nach einem der vorhergehenden Ansprüche, ferner umfassend:
eine Steuereinrichtung (10), die dazu eingerichtet ist, wenn das Lesezeichen (55) ausgewählt wird, ein gespeichertes Sendeprogramm entsprechend dem Lesezeichen aus der Speichereinheit (5) zu erhalten und das Sendeprogramm anzuzeigen.

10. Verfahren zum Erzeugen eines Lesezeichens zum Durchsuchen einer Speichereinheit (15) nach einem gespeicherten Sendeprogramm, umfassend:
Speichern eines Sendeprogrammes, das anzuzeigen ist; und **gekennzeichnet durch**
Bestimmen **durch** Vergleichen einer Programminformation, die in einem Sendestrom eines Sendeprogrammes enthalten ist, das gerade gespeichert wird, mit einer Programminformation eines vorher gespeicherten Sendeprogrammes, ob das Sendeprogramm während des Speicherns des Sendeprogrammes wechselt;
Erzeugen eines Lesezeichens, wenn der Programmwechsel bestimmt wird, das eine Stelle kennzeichnet, an der das Sendeprogramm wechselt; und
Speichern des erzeugten Lesezeichens.

11. Verfahren nach Anspruch 10, wobei die Programminformation eine elektronische Programmführer- (EPG-) Information oder eine erweiterte Programmführer- (APG-) Information ist.

12. Verfahren nach Anspruch 10 oder 11, wobei das Bestimmen umfasst:
Bestimmen, ob das Sendeprogramm wechselt, basierend auf Programminformation, die bereitgestellt wird, wenn das Sendeprogramm übertragen wird.

13. Verfahren nach einem der Ansprüche 10, 11 oder 12, wobei das Bestimmen umfasst: Bestimmen, dass das Sendeprogramm wechselt, wenn ein Kanal wechselt.

14. Verfahren nach einem der Ansprüche 10 bis 13, ferner umfassend:
Anzeigen eines Speicherzustandes des Sendeprogrammes und eines Fortschrittsbalkens, der ein Lesezeichen darstellt.

15. Verfahren nach Anspruch 14, wobei das Erzeugen umfasst: Kennzeichnen des Lesezeichens durch zumindest eine von einer Linie, einer Leerstelle und einer speziellen Markierung auf einer Seite des Fortschrittsbalkens.

## Revendications

1. Appareil vidéo comprenant :
une unité de stockage (15) pour stocker au moins un programme de diffusion ; et
un créateur de signet (20) configuré pour créer un signet (55) et stocker le signet dans l'unité de stockage (15) ; **caractérisé par** :
un détecteur de programme (15) configuré pour détecter un changement dans le programme de diffusion pendant le stockage du programme de diffusion en comparant des informations de programme contenues dans un flux de diffusion d'un programme de diffusion actuellement stocké avec des informations de programme d'un programme de diffusion précédemment stocké pour déterminer le changement dans le programme de diffusion, dans lequel le créateur de signet (20) est configuré pour créer le signet (55) indiquant un point où le programme de diffusion change si le changement est détecté.

2. Appareil selon la revendication 1, dans lequel le détecteur de programme (15) est configuré pour déterminer si le programme de diffusion change sur la base des informations de programme fournies lorsque le programme de diffusion est transmis.

3. Appareil selon la revendication 1 ou 2, dans lequel les informations de programme sont des informations de guide de programme électronique (EPG) ou de guide de programme avancé (APG).

4. Appareil selon l'une quelconque des revendications précédentes, dans lequel le détecteur de programme (15) est configuré pour déterminer que le programme de diffusion change lorsqu'un canal change.

5. Appareil selon l'une quelconque des revendications précédentes, comprenant en outre un affichage de barre de progression (25) qui représente des programmes de diffusion stockés, et une barre de progression indiquant une position du signet (55) créé par le créateur de signet (20).

6. Appareil selon la revendication 5, dans lequel le signet est indiqué par au moins l'un des éléments suivants : une ligne, un espace, et une marque spécifique sur un côté de la barre de progression.

7. Appareil selon la revendication 5 ou 6, comprenant en outre un moyen d'entrée pour une entrée externe, dans lequel le moyen d'entrée comprend un bouton de sélection de signet pour sélectionner le signet.

8. Appareil selon la revendication 7, dans lequel le bouton de sélection de signet comprend au moins l'un des éléments suivants : une touche de direction utilisée pour sélectionner le signet en déplaçant un curseur formé sur la barre de progression vers le haut et vers le bas ou vers la droite et vers la gauche, une touche de sélection utilisée pour sélectionner le signet en déplaçant le curseur en fonction du nombre de pressions sur la touche, et une touche numérique utilisée pour sélectionner le signet correspondant à un numéro sélectionné avec la touche numérique.

9. Appareil selon l'une quelconque des revendications précédentes, comprenant en outre un contrôleur (10) configuré pour obtenir un programme de diffusion stocké correspondant au signet à partir de l'unité de stockage (5) et afficher le programme de diffusion si le signet (55) est sélectionné.

10. Procédé pour créer un signet pour rechercher dans une unité de stockage (15) un programme de diffusion stocké, comprenant l'étape consistant à :
stocker un programme de diffusion à afficher, et **caractérisé par** les étapes consistant à :
déterminer si le programme de diffusion change pendant le stockage du programme de diffusion en comparant des informations de programme contenues dans un flux de diffusion d'un programme de diffusion actuellement stocké à des informations de programme d'un programme de diffusion précédemment stocké ;
créer un signet indiquant un point où le programme de diffusion change si le changement de programme est déterminé ; et
stocker le signet créé.

11. Procédé selon la revendication 10, dans lequel les informations de programme sont des informations de guide de programme électronique (EPG) ou de guide de programme avancé (APG).

12. Procédé selon la revendication 10 ou 11, dans lequel l'étape de détermination comprend l'étape consistant à déterminer si le programme de diffusion change sur la base des informations de programme fournies lorsque le programme de diffusion est transmis.

13. Procédé selon la revendication 10, 11 ou 12, dans lequel l'étape de détermination comprend l'étape consistant à déterminer que le programme de diffusion change si un canal change.

14. Procédé selon l'une quelconque des revendications 10 à 13, comprenant en outre l'étape consistant à afficher un état de stockage du programme de diffusion et une barre de progression représentant un signet.

15. Procédé selon la revendication 14, dans lequel l'étape de création comprend l'étape consistant à indiquer le signet par au moins l'un des éléments suivants :une ligne, un espace et une marque spécifique sur un côté de la barre de progression.
